# EUROPEAN PATENT SPECIFICATION

(11) **EP 3 986 148 B1**
(45) Date of publication and mention of the grant of the patent: **05.03.2025**
(21) Application number: 20733961.5
(22) Date of filing: 18.06.2020
(51) Int. Cl.: A23D 7/005, A23D 7/04, A23L 3/46, A23L 27/00

(54) **STABLE, SPRAY-DRIED FLAVOR COMPOSITIONS**
STABILE SPRÜHGETROCKNETE GESCHMACKSZUSAMMENSETZUNGEN
COMPOSITIONS AROMATISANTES STABLES SÉCHÉES PAR PULVÉRISATION

(30) Priority: 21.06.2019 US 201962864584 P
(43) Date of publication of application: 27.04.2022
(73) Proprietor: Givaudan SA, 1214 Vernier (CH)
(72) Inventor: SHERMAN, Gregory Alan, Cincinnati, Ohio 45245 (US); DOORN, Aloysius, Lambertus, 3893 CB Zeewolde (NL)
(74) Representative: Global Patents
(86) International application number: PCT/EP2020/066952
(87) International publication number: WO 2020/254495

(56) References cited:
- US-A1- 2003 152 629
- US-A1- 2011 039 002
- DATABASE GNPD [online] MINTEL; 2 July 2018 (2018-07-02), ANONYMOUS: "Multigrains, Fruits & Vegetables Drink Mix", XP055720247, retrieved from https://www.gnpd.com/sinatra/recordpage/5794561/ Database accession no. 5794561
- DATABASE GNPD [online] MINTEL; 19 November 2018 (2018-11-19), ANONYMOUS: "Flax Plus Red Berry Crunch", XP055720244, retrieved from https://www.gnpd.com/sinatra/recordpage/6129279/ Database accession no. 6129279
- DATABASE GNPD [online] MINTEL; 19 November 2018 (2018-11-19), ANONYMOUS: "Flax Plus Red Berry Crunch", XP055720244, retrieved from www.gnpd.com Database accession no. 6129279
- DATABASE GNPD [online] MINTEL; 2 July 2018 (2018-07-02), ANONYMOUS: "Multigrains, Fruits & Vegetables Drink Mix", XP055720247, retrieved from www.gnpd.com Database accession no. 5794561

## Description

### TECHNICAL FIELD

The present description relates to moisture and oxygen stable spray-dried flavor compositions and methods of producing such flavor compositions. More particularly, the present description relates to stable spray-dried flavor compositions including spray-dried particles including a combination of soluble rice bran and oat oil having synergistic antioxidant effect.

### BACKGROUND

Encapsulating volatile components in a solid encapsulating matrix is a well-known method. The advantages are numerous and include, for example, (i) the protection of the volatile component against undesired evaporation during storage, (ii) the protection of chemically sensitive components against chemical degradation, such as oxidation and hydrolysis, and (iii) the possibility to control the release of the encapsulated component.

Numerous methods can be used to produce solids comprising encapsulated volatile ingredients. However, the most common and economical way to encapsulate a volatile component involves the step of emulsifying the volatile component in an aqueous phase comprising encapsulating materials to form an oil-in-water emulsion and drying this emulsion by spray drying, spray granulation or spray coating to obtain a dry emulsion. The morphology of the dry product is that of a multitude of oil droplets in a glassy, polar, encapsulating matrix. The polar, encapsulating matrix is usually based on carbohydrate materials, such as modified starches, maltodextrins, and gums. It is also desirable to encapsulate volatile components in a matrix made from foodstuffs, i.e. clean label products.

Thus, there remains a need to provide spray-dried flavor compositions (both artificial and clean label) with improved oxidation protection.

Spray-dried flavor compositions are known from, for example, US 2011/039002 and US 2003/152629.

### SUMMARY

In one illustrative embodiment of the present description, which does not fall within the scope of the present invention and is disclosed for illustration purposes, a spray-dried flavor composition includes stable spray-dried particles including a water-soluble matrix comprising (i) a filler; (ii) at least about 1% of a fat component encapsulated in the matrix, based on the total weight of the matrix; and (iii) a combination of soluble rice bran and oat oil, the combination providing emulsification and improved antioxidant activity for the spray-dried flavor compositions.

According to the invention, there is provided a spray-dried flavor composition as defined in claim 1.

These and other features, aspects and advantages of specific embodiments will become evident to those skilled in the art from a reading of the present description.

### DETAILED DESCRIPTION

The following text sets forth a broad description of numerous different examples of the present description. The description is to be construed as exemplary only and does not describe every possible embodiment since describing every possible embodiment would be impractical, if not impossible.

In the present description, there is disclosed spray-dried flavor compositions having stable spray-dried particles including a water-soluble matrix. The matrix according to one example includes (i) a filler; (ii) at least about 1% of a fat component encapsulated in the matrix, based on the total weight of the matrix; and (iii) a combination of soluble rice bran and oat oil, the combination providing emulsification and improved antioxidant activity for the spray-dried flavor compositions.

The term "emulsifier", as used herein, is intended to mean a surface-active agent that facilitates the mixing of two or more liquid substances that would separate into its component parts under normal conditions. In one example, the emulsifier may be soluble rice bran. Soluble rice bran is a nutritional product derived from the bran shavings produced as brown rice is converted into white rice. A variety of soluble rice brans are readily available commercially, including for example, RISOLUBLE, from RiceBran Technologies, Scottsdale, AZ, a soluble extract of α-amylase treated stabilized rice bran.

In another example, the emulsifier may be oat oil. A variety of oat oils are readily available commercially, including for example, SWEOAT Oil, from Swedish Oat Fiber AB. As further discussed herein, soluble rice bran and oat oil are both emulsifiers and antioxidants.

In another example, the emulsifier may be potato protein. Potato proteins are highly functional, in terms of excellent solubility and good emulsifying and foaming abilities. Potato is a cheap and widely available produce, and its proteins have a high nutritional value compared to most major plant proteins and close to that of egg proteins. Importantly, potato proteins are considered GRAS and non-allergenic and hence are not included in the list of known food allergens, which must be declared on a food label. Further, potato proteins may be Kosher and Halal certified and non-GMO. Exemplary potato proteins are available, for example, from Solanic, which is a subsidiary of AVEBE of Veedam, The Netherlands. Potato proteins are commercially available in the form of concentrates and isolates containing 80% to 95% protein.

In another example, the emulsifier may be dextrin. Dextrins are a group of low-molecular-weight carbohydrates produced by the hydrolysis of starch or glycogen. Dextrins used in the food industry are classified as white dextrins and are less viscous than the starch that they came from (potato, corn or rice, for instance). In one example, the dextrin is derived from corn. In another example, the emulsifier may be selected from beef stock protein, beef bone marrow extract, chicken stock protein, chicken gelatin, citrus pectin, egg yolk, albumin, gelatin hydrolysate, pork stock protein, sugar beet pectin, turkey stock protein, whey protein concentrate, soy protein, yogurt, non-fat milk solids, quillaja extract, pea protein, chickpea protein and rice bran proteins.

In another example, emulsifiers may be selected from fatty acid mono- and diglycerides, esters derived from the combination of fatty acids with sorbitol or a saccharide or their alkoxylated derivatives or an ester of tartaric, citric, ascorbic and lactic acid, for example, under the trade names TWEEN, POLYSORBATE and ADMUL. In another example, suitable emulsifiers may be film forming gums, modified starches, pectins, alginates, mucilages and mixtures thereof. For example, emulsifiers may be gum arabic, gum acacia, tragacanth, karaya, ghatti, agar, carrageenans, fucellan, psyllium and mixtures thereof or from gelatin, dextran, xanthan, curdlan, cellulose, methylcellulose, ethylcellulose, hydroxyethylcellulose, hydroxypropyl cellulose, hydroxypropyl methylcellulose, carboxymethyl cellulose, low methody pectic, propylene glycol alginate and mixtures thereof. Examples of suitable chemically modified starches are Capsul^{®} and N-LOK (National Starch). In another example, a suitable emulsifier may be sunflower lecithin.

The amount of emulsifier present in the matrix can vary widely and may be based on the particular needs of the intended consumer, or the intended product form of the spray-dried particles. Also, the amount of emulsifier present will depend on the percent flavour load, adjusted as needed to form a good emulsion to produce good encapsulation. In certain examples, emulsifier may be present in an amount of about 5% to about 30% by weight based on the total weight of the matrix. In another example, emulsifier may be present in an amount of about 7% to about 25% by weight based on the total weight of the matrix. In another example, emulsifier may be present in an amount of about10% to about 20% by weight based on the total weight of the matrix.

Another component of the matrix according to the present disclosure is a filler. In one example, the filler may be selected from the group consisting of glucose syrup, soluble fibers and combinations thereof. The term "glucose syrup", as used herein, refers to an aqueous composition containing glucose solids. Glucose syrup may also be referred to as glucose syrup solids, dried glucose syrup, dried potato syrup or potato syrup solids. Glucose syrup is a purified aqueous solution of nutritive saccharides obtained from edible starches having a dextrose equivalent greater than 20. It is primarily a food industry ingredient, belonging to the group starch hydrolysates or starch syrups. To produce glucose syrup, starch granules are extracted from vegetable raw materials (mostly corn, wheat, barley, rice, cassava and potato), and are treated with acids and/or microbial enzymes to produce the sweet syrup that is then purified and evaporated to the desired concentration. In one example, the filler is potato glucose syrup. In certain examples, glucose syrup may be present in an amount of about 40% to about 99.9% by weight based on the total weight of the matrix. In another example, glucose syrup may be present in an amount of about 95% by weight based on the total weight of the matrix. Potato glucose syrups are commercially for example, from AVEBE of Veedam, The Netherlands.

Soluble fibers can be derived from a variety of starch sources. In one example, starch sources may include cereal grains (including corn, wheat, rice and combinations thereof) potato, or tapioca. When corn is used as the starting material, the soluble fiber composition is sometimes referred to as SCF (soluble corn fiber). While certain examples of the matrix are described herein with reference to soluble corn fibers, the person of ordinary skill in the art will appreciate that other soluble fibers could be used in place of the soluble corn fibers in certain examples of the invention. In certain examples, soluble fibers may be present in an amount of about 40% to about 99.9% by weight based on the total weight of the matrix. In another example, soluble fibers may be present in an amount of about 95% by weight based on the total weight of the matrix. Suitable commercial soluble fiber products (based on corn and/or wheat) include PROMITOR Soluble Corn Fiber 70L or 70R available from Tate & Lyle Health & Nutrition Sciences, Hoffman Estates, IL; NUTRIOSE FM06 or FM10 available from Roquette America, Inc., Keokuk, IA; and QUEMINA available from Agrana Beteiligungs-AG, Vienna, Austria.

In another example, the filler may be maltodextrin. In certain examples, maltodextrin may be present in an amount of about 20% to about 75% by weight based on the total weight of the matrix. In another example, maltodextrin may be present in an amount of about 40% to about 60% by weight based on the total weight of the matrix. A variety of maltodextrins are readily available commercially, including maltodextrins from, for example, tapioca, maize and potato. In one example, potato maltodextrins are commercially available for example, from AVEBE of Veedam, The Netherlands.

In another example, the filler may be selected from chicory root fiber (e.g. FIBRULOSE F97), inulin, or plasticizers such as sugar, mono and disaccharides, sugar alcohols and polyols.

In one example, the matrix also includes a fat component encapsulated therein. In one embodiment, the encapsulated component is not restricted to a specific class of molecules. It may refer to a substance, a compound, and/or an ingredient, alone or a mixture thereof.

In one example, the fat component is selected from meat fats. Examples of suitable fat components include, but are not limited to chicken, turkey, lamb, beef, ham, pork, bacon, venison, veal, duck and combinations thereof. In another embodiment, the fat component May include any water insoluble oil phase that is known to oxidize if it is not protected via encapsulation or antioxidant additives, for example, any fat that is animal or vegetable sourced, as well as natural or synthetic flavor oils.

In certain examples, the fat component may be present in an amount of at least about 1%; in another example up to about 70%; in another example from about 1% to about 70%; and in yet another example from about 5% to about 25%.

In one example, the matrix also includes an antioxidant which may be oat oil. A variety of oat oils are also readily available commercially, including for example, SWEOAT Oil, from Swedish Oat Fiber AB. In another embodiment, the matrix includes an antioxidant which may be soluble rice bran. A variety of soluble rice brans are readily available commercially, including for example, RISOLUBLE, from RiceBran Technologies, Scottsdale, AZ, a soluble extract of α-amylase treated stabilized rice bran.

Antioxidants are compounds that delay or inhibit the oxidation of foods. When added to foods, they minimize the rancidity, preserve normal color, maintain nutrition quality and extend the shelf life.

In the present description, oat oil and soluble rice bran are combined. This combination of oat oil with the soluble rice bran provides a synergistic activity relating to antioxidative activity. Neither soluble rice bran or oat oil, exerts such an efficient antioxidative activity when used alone in a spray-dried particle as they do when combined (even though both oat oil and rice bran are good antioxidants when used alone). Without being limited by theory, it is believed that the synergistic activity is due to the differing mechanisms for oxidation protection, namely, the soluble rice bran relies on its phytic acid to act as a metal chelating agent which slows oxidation while oat oil contains natural free radical scavengers such as tocopherols. Further, this combination of oat oil and soluble rice bran serves as a natural alternative to synthetic antioxidants such as, for example, tert-Butylhydroquinone (TBHQ), methylparaben (MP), ethylparaben (EP), propylparaben (PP), butylparaben (BP), butylated hydroxyanisole (BHA), butylated hydroxytoluene (BHT), alpha-tocopherol (alpha-t) and alpha-tocopherol acetate (alpha-ta).

In certain examples, antioxidant may be present in an amount of about .05% to about 2% by weight based on the total weight of the matrix.

In addition to the fat component, the matrix may contain at least one active component encapsulated therein. In one example, the at least one active component is selected from volatile flavours and fragrances. The terms "flavour or fragrance" encompass flavour or fragrance ingredients or compositions of current use in the flavour and/or fragrance industry, of both natural and synthetic origin. It includes single compounds and mixtures. Specific examples of such flavour or fragrance ingredients may be found in the current literature, e.g. in Fenaroli's Handbook of flavour ingredients, 1975, CRC Press; Synthetic Food adjuncts, 1947 by M. B. Jacobs, edited by Van Nostrand; or Perfume and Flavor Chemicals by S. Arctander, 1969, Montclair, N.J. (USA). The flavour or fragrance ingredients may be present in the form of a mixture with solvents, adjuvants, additives and/or other components, generally those of current use in the flavours and fragrance industry.

Flavour and fragrance compositions may include a broad variety of mixtures of aromatic and fragrant ingredients, such as terpenes, terpene derivatives, esters, alcohols, ethers, ketones, lactones, aldehydes, anthranilates, nitriles, mercaptans, N- and S-heterocycles and the like.

Examples of suitable flavour ingredients include, but are not limited to, natural flavours, artificial flavours, spices, seasonings, synthetic flavour oils and flavoring aromatics and/or oils, oleoresins, essences, and distillates, and a combination comprising at least one of the foregoing.

Flavour oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil; useful flavoring agents include artificial, natural and synthetic fruit flavours such as vanilla, and citrus oils including lemon, orange, lime, grapefruit, yuzu, sudachi, and fruit essences including apple, pear, peach, grape, raspberry, blackberry, gooseberry, blueberry, strawberry, cherry, plum, prune, raisin, cola, guarana, neroli, pineapple, apricot, banana, melon, apricot, cherry, tropical fruit, mango, mangosteen, pomegranate, papaya, and so forth.

Additional exemplary flavours imparted by a flavour ingredient include a milk flavour, a butter flavour, a cheese flavour, a cream flavour, and a yogurt flavour, a vanilla flavour, teaflavours, such as a green tea flavour, an oolong tea flavour, a cocoa flavour, a chocolate flavour, and a coffee flavour; mint flavours, such as a peppermint flavour, a spearmint flavour, and a Japanese mint flavour; spicy flavours, such as an asafetida flavour, an ajowan flavour, an anise flavour, an angelica flavour, a fennel flavour, an allspice flavour, a cinnamon flavour, a chamomile flavour, a mustard flavour, a cardamom flavour, a caraway flavour, a cumin flavour, a clove flavour, a pepper flavour, a coriander flavour, a sassafras flavour, a savory flavour, a Zanthoxyli Fructus flavour, a perilla flavour, a juniper berry flavour, a ginger flavour, a star anise flavour, a horseradish flavour, a thyme flavour, a tarragon flavour, a dill flavour, a capsicum flavour, a nutmeg flavour, a basil flavour, a parsley flavour, a marjoram flavour, a rosemary flavour, a bayleaf flavour, and a wasabi (Japanese horseradish) flavour; a nut flavour such as an almond flavour, a hazelnut flavour, a macadamia nut flavour, a peanut flavour, a pecan flavour, a pistachio flavour, and a walnut flavour; floral flavours; and vegetable flavours, such as an onion flavour, a garlic flavour, a cabbage flavour, a carrot flavour, a celery flavour, mushroom flavour, and a tomato flavour.

According to some examples, flavour ingredients may also include aldehydes and esters such as cinnamyl acetate ((E)-3-phenylprop-2-en-1-yl acetate); cinnamaldehyde ((2E)-3-phenylprop-2-enal); citral diethylacetal ((E)-1,1-dimethoxy-3,7-dimethylocta-2,6-diene), dihydrocarvyl acetate (2-methyl-5-prop-1-en-2-ylcyclohexyl acetate), eugenyl formate ((2S)-1,3,3-trimethylbicyclo[2.2.1]heptan-2-yl acetate), p-methylanisol (1-methoxy-4-methylbenzene), and so forth can be used. Further examples of aldehyde flavourings include acetaldehyde (apple), benzaldehyde (cherry, almond), anisic aldehyde (4-methoxybenzaldehyde) (licorice, anise), cinnamic aldehyde ((2E)-3-phenylprop-2-enal) (cinnamon), citral (E)-3,7-dimethylocta-2,6-dienal), i.e., alpha-citral ((EE)-3,7-dimethylocta-2,6-dienal (lemon, lime), neral, i.e., beta-citral ((EZ)-3,7-dimethylocta-2,6-dienal (lemon, lime), decanal (orange, lemon), ethyl vanillin (vanilla, cream), heliotrope, i.e., piperonal (benzo[d][1,3]dioxole-5-carbaldehyde) (vanilla, cream), vanillin (vanilla, cream), alpha-amyl cinnamaldehyde ((E or Z)-2-benzylideneheptanal) (spicy fruity flavours), butyraldehyde (butanal) (butter, cheese), valeraldehyde (pentanal) (butter, cheese), citronellal (3,7-dimethyloct-6-enal) (modifies, many types), decanal (citrus fruits), aldehyde C-8 (octanal) (citrus fruits), aldehyde C-9 (nonanal) (citrus fruits), aldehyde C-12 (dodecanal) (citrus fruits), 2-ethyl butyraldehyde (2-ethylbutanal) (berry fruits), hexenal, i.e., trans-2 hexenal (berry fruits), tolyl aldehyde (4-methylbenzaldehyde) (cherry, almond), veratraldehyde (3,4-dimethoxybenzaldehyde) (vanilla), 2,6-dimethyl-5-heptenal, i.e., melonal (melon), 2,6-dimethyloctanal (green fruit), and 2-dodecenal (citrus, mandarin), and the like.

**In** another example, flavour ingredients include natural compounds derived from Maillard reactions.

The spray-dried particles may include from about 0.5% to about 50%, in another example from about 1% to about 30%, in yet another example about 25%, or any individual number within the range, by weight of the particle of at least one active component. In one example, the level of free active component, (i.e. surface oil level) is lower than about 1.5%, in another embodiment lower than about 1%, in another example lower than about 0.3% and in yet another example lower than about 0.15% by weight of the spray-dried particles. Surface oil level should be minimized. The amount of surface oil that can be tolerated without negative impact on processing and/or encapsulation performance will depend on the composition of the flavour which will determine its volatility and oxidation stability. Lower oil loading and increasing the emulsifier level will help to reduce surface oil. For higher oil loadings the addition of plasticizer such as fruit or vegetable concentrates containing natural sugars and food acids will help reduce surface oil.

The spray-dried particles according to the present description may be used in a wide variety of consumables or applications and is not restricted to any particular physical mode or product form. According to the present description, the term "consumable" refers to products for consumption by a subject, typically via the oral cavity (although consumption may occur via non-oral means such as inhalation), for at least one of the purposes of enj oyment, nourishment, or health and wellness benefits. Consumables may be present in any form including, but not limited to, liquids, solids, semi-solids, tablets, capsules, lozenges, strips, powders, gels, gums, pastes, slurries, solutions, suspensions, syrups, aerosols and sprays. The term also refers to, for example, dietary and nutritional supplements. Consumables include compositions that are placed within the oral cavity for a period of time before being discarded but not swallowed. It may be placed in the mouth before being consumed, or it may be held in the mouth for a period of time before being discarded.

Broadly, consumables include, but are not limited to, comestibles of all kinds, confectionery products, baked products, sweet products, savoury products, fermented products, dairy products, beverages, oral care products, nutraceuticals and pharmaceuticals.

Exemplary comestibles include, but are not limited to, chilled snacks, sweet and savoury snacks, fruit snacks, chips/crisps, extruded snacks, tortilla/corn chips, popcorn, pretzels, nuts, other sweet and savoury snacks, snack bars, granola bars, breakfast bars, energy bars, fruit bars, other snack bars, meal replacement products, slimming products, convalescence drinks, ready meals, canned ready meals, frozen ready meals, dried ready meals, chilled ready meals, dinner mixes, meat analogues, frozen pizza, chilled pizza, soup, canned soup, dehydrated soup, instant soup, chilled soup, UHT soup, frozen soup, pasta, canned pasta, dried pasta, chilled/fresh pasta, noodles, plain noodles, instant noodles, cups/bowl instant noodles, pouch instant noodles, chilled noodles, snack noodles, dried food, dessert mixes, sauces, dressings and condiments, herbs and spices, spreads, jams and preserves, honey, chocolate spreads, nut-based spreads, and yeast-based spreads.

Exemplary confectionery products include, but are not limited to, chewing gum (which includes sugarized gum, sugar-free gum, functional gum and bubble gum), centerfill confections, chocolate and other chocolate confectionery, medicated confectionery, lozenges, tablets, pastilles, mints, standard mints, power mints, chewy candies, hard candies, boiled candies, breath and other oral care films or strips, candy canes, lollipops, gummies, jellies, fudge, caramel, hard and soft panned goods, toffee, taffy, liquorice, gelatin candies, gum drops, jelly beans, nougats, fondants, combinations of one or more of the above, and edible flavour compositions incorporating one or more of the above.

Exemplary baked products include, but are not limited to, alfajores, bread, packaged/industrial bread, unpackaged/artisanal bread, pastries, cakes, packaged/industrial cakes, unpackaged/artisanal cakes, cookies, chocolate coated biscuits, sandwich biscuits, filled biscuits, savoury biscuits and crackers, and bread substitutes.

Exemplary sweet products include, but are not limited to, breakfast cereals, ready-to-eat ("rte") cereals, family breakfast cereals, flakes, muesli, other ready to eat cereals, children's breakfast cereals, and hot cereals.

Exemplary savoury products include, but are not limited to, salty snacks (potato chips, crisps, nuts, tortilla-tostada, pretzels, cheese snacks, corn snacks, potato-snacks, ready-to-eat popcorn, microwaveable popcorn, pork rinds, nuts, crackers, cracker snacks, breakfast cereals, meats, aspic, cured meats (ham, bacon), luncheon/breakfast meats (hotdogs, cold cuts, sausage), tomato products, margarine, peanut butter, soup (clear, canned, cream, instant, ultrahigh temperature "UHT"), canned vegetables, and pasta sauces.

Exemplary dairy products include, but are not limited to, cheese, cheese sauces, cheese-based products, ice cream, impulse ice cream, single portion dairy ice cream, single portion water ice cream, multi-pack dairy ice cream, multi-pack water ice cream, take-home ice cream, take-home dairy ice cream, ice cream desserts, bulk ice cream, take-home water ice cream, frozen yoghurt, artisanal ice cream, milk, fresh/pasteurized milk, full fat fresh/pasteurized milk, semi skimmed fresh/pasteurized milk, long-life/uht milk, full fat long life/uht milk, semi skimmed long life/uht milk, fat-free long life/uht milk, goat milk, condensed/evaporated milk, plain condensed/evaporated milk, flavoured, functional and other condensed milk, flavoured milk drinks, dairy only flavoured milk drinks, flavoured milk drinks with fruit juice, soy milk, sour milk drinks, fermented dairy drinks, coffee whiteners, powder milk, flavoured powder milk drinks, cream, yoghurt, plain/natural yoghurt, flavoured yoghurt, fruited yoghurt, probiotic yoghurt, drinking yoghurt, regular drinking yoghurt, probiotic drinking yoghurt, chilled and shelf-stable desserts, dairy-based desserts, and soy-based desserts.

Exemplary beverages include, but are not limited to, flavoured water, soft drinks, fruit drinks, coffee-based drinks, tea-based drinks, juice-based drinks (includes fruit and vegetable), milk-based drinks, gel drinks, carbonated or non-carbonated drinks, powdered drinks, alcoholic or non-alcoholic drinks, and ready to drink liquid formulations of these beverages.

Exemplary fermented foods include, but are not limited to, cheese and cheese products, meat and meat products, soy and soy products, fish and fish products, grain and grain products, fruit and fruit products.

The particles according to the present description may be produced using standard spray drying equipment and typical conditions known to the art. In another embodiment, particles according to the present description may be produced using multistage dryer (MSD) equipment and typical conditions known in the art. Conditions may naturally vary depending on the nature of the equipment and the material being sprayed, but the person skilled in the art can readily determine the appropriate conditions in every case with only routine experimentation. Typical examples of conditions that produce dry powder with a moisture content of less than 5% and water activity in the desirable range of from 0.05 to 0.30 at 25°C. Water activity (A_{w}) is the partial vapor pressure of water in a substance divided by the standard state partial vapor pressure of water. It is a measurement of the relative humidity of the sample in a closed chamber - basically A_{w} is the equilibrium humidity emitted by the sample material.

Typical parameters for use on a conventional tower spray dryer are:
Inlet temperature - 100-250°C
Outlet temperature - 60-120°C

The finished material size should be about 10 to about 300 µm mean diameter by volume distribution, as measured by laser diffraction particle size instrument. Other non-limiting examples of suitable drying techniques include fluid bed drying, freeze drying, FILTERMAT or spray belt drying, drum drying, tray drying and vacuum drying.

The disclosure is further described with reference to the following non-limiting examples.

### EXAMPLES

The following examples are given solely for the purpose of illustration and are not to be construed as limitations of the present description.

### Examples -Chicken Fat Encapsulations

Emulsions were prepared from the ingredients listed below:

**Table 1**

| Ingredients (g) | Ex. A | Ex. B | Ex. C | Ex. D | Ex. E |
|---|---|---|---|---|---|
| Water | 1000 | 1000 | 1000 | 1000 | 1000 |
| Chicken Fat¹ | 200 | 200 | 200 | 200 | 200 |
| Potato Protein | 0 | 0 | 0 | 86 | 0 |
| Potato Syrup Solids | 700 | 747 | 640 | 661 | 661 |
| Oat Oil | 0 | 0 | 0 | 22 | 22 |
| Soluble Rice Bran | 160 | 86 | 258 | 0 | 86 |

| | | | | | |
|---|---|---|---|---|---|
| ¹Commercial chicken fat available from International Dehydrated Foods, Inc. | | | | | |

Emulsions according to the present description were prepared as follows: For Examples A, B, C and E, soluble rice bran and filler (potato syrup solids) were dissolved in water. For Example D, potato protein and filler (potato syrup solids) were dissolved in water. For Examples D and E that use oat oil, the oat oil is added to the water phase before homogenization. The fat component was added to the water phase containing the dissolved emulsifier and filler under high shear mixing, for example, IKA mixer to create an emulsion. High shear mixing means mixing at a speed and time sufficient to produce an emulsion from the mixture of matrix ingredients and active component(s). By way of illustration, but not in limitation, the ingredients may be mixed at a speed of at least 8000 RPM for at least 5 minutes. Further non-limiting examples of high shear mixing includes mixing the ingredients at a speed of about 5,000 RPM to about 12,000 RPM for about 10 minutes to about 2 minutes, respectively.

The compositions of the samples are reported on Table 1. The emulsions are then spray-dried using an Anhydro PSD55 spray drying unit equipped with a rotary atomizer and a peristaltic delivery pump. Inlet and outlet temperatures were respectively 170°C (± 5°C) and 95°C (± 3°C). The powder was recovered by means of a cyclone separator.

### Stability Results

A number of methods are well known to those skilled in the art for determining oxidative stability. In the present description, the OXITEST Oxidation test reactor provided by Velp Scientifica, Italy was used to measure oxidative stability. The end point, or induction point, is determined according to ASTM D942, IP method. The longer the induction point (measured in hours), the more stable the delivery system.

Examples A-E were evaluated for oxidative stability by the OXITEST (55 °C and 6 bar). The results for these Examples are provided below in Table 2.

**Table 2**

| Example | % Soluble Rice Bran in Carrier | % Oat Oil in Carrier | Induction Point (Hr:Min) | Powder Rate of Oxidation (µmoles/h/g) | Oil Rate of Oxidation (µmoles/h/g) |
|---|---|---|---|---|---|
| A | 10 | - | 134:16 | 1.343 | 17.9 |
| B | 19 | - | 191:38 | 1.16 | 15.468 |
| C | 29 | - | 189:59 | 0.539 | 7.183 |
| D | - | 3 | 201:35 | 0.14 | 1.83 |
| E | 10 | 3 | >400 | 0.004 | 0.056 |

The induction point results demonstrate that the delivery system according to the present description (Example E) provides a more oxidative stable delivery system as compared to the other systems of Examples A-D. In fact, the results in Table 2 demonstrate an at least 100% improvement in the oxidative stability of delivery systems comprising the combination of soluble rice bran and oat oil according to the present description as compared to systems using soluble rice bran or oat oil alone.

## Claims

1. Spray-dried flavor composition comprising:
oxidative stable spray-dried particles including a water-soluble matrix, the matrix comprising:
(i) a filler;
(ii) 5-25% of a fat component encapsulated in the matrix, based on the total weight of the matrix; and
(iii) an emulsifier combination of soluble rice bran and oat oil, wherein soluble rice bran and oat oil are both emulsifiers and antioxidants, the combination providing emulsification and improved antioxidant activity for the spray-dried flavor compositions, and
wherein the emulsifier combination is present in an amount of from 10% to 20%, based on the total weight of the matrix,
wherein the spray-dried flavor composition further comprises at least one active component encapsulated in the matrix, which is selected from flavor ingredients.

2. The spray-dried flavor composition according to claim 1, further comprising a densifier.

3. The spray-dried flavor composition according to claim 2, wherein the densifier is sucrose.

## Patentansprüche

1. Sprühgetrocknete Geschmacksstoffzusammensetzung, umfassend:
oxidative stabile sprühgetrocknete Teilchen mit einer wasserlöslichen Matrix, wobei die Matrix Folgendes umfasst:
(i) einen Füllstoff;
(ii) 5 bis 25 % einer in der Matrix verkapselten Fettkomponente, bezogen auf das Gesamtgewicht der Matrix; und
(iii) eine Emulgatorkombination aus löslicher Reiskleie und Haferöl, wobei es sich bei der löslichen Reiskleie und dem Haferöl um sowohl Emulgatoren als auch um Antioxidantien handelt, wobei die Kombination Emulgierung und verbesserte antioxidative Wirkung für die sprühgetrockneten Geschmacksstoffzusammensetzungen bereitstellt, und wobei die Emulgatorkombination in einer Menge von 10 % bis 20 %, bezogen auf das Gesamtgewicht der Matrix, vorliegt,
wobei die sprühgetrocknete Geschmacksstoffzusammensetzung ferner mindestens eine in der Matrix verkapselte Wirkkomponente, die aus Geschmacksstoff-Inhaltsstoffen ausgewählt ist, umfasst.

2. Sprühgetrocknete Geschmacksstoffzusammensetzung nach Anspruch 1, die ferner einen Verdichter umfasst.

3. Sprühgetrocknete Geschmacksstoffzusammensetzung nach Anspruch 2, wobei es sich bei dem Verdichter um Saccharose handelt.

## Revendications

1. Composition d'arôme séchée par pulvérisation comprenant :
des particules séchées par pulvérisation stables à l'oxydation comprenant une matrice soluble dans l'eau, la matrice comprenant :
(i) une charge ;
(ii) 5 à 25 % d'un composant graisse encapsulé dans la matrice, sur la base du poids total de la matrice ; et
(iii) une combinaison d'émulsifiant de son de riz soluble et d'huile d'avoine, le son de riz soluble et l'huile d'avoine étant tous deux des émulsifiants et des antioxydants, la combinaison fournissant une émulsification et une activité antioxydante améliorée pour les compositions d'arôme séchées par pulvérisation, et
la combinaison d'émulsifiant étant présente en une quantité allant de 10 % 20 %, sur la base du poids total de la matrice,
la composition d'arôme séchée par pulvérisation comprenant en outre au moins un composant actif encapsulé dans la matrice, qui est choisi parmi des ingrédients d'arôme.

2. Composition d'arôme séchée par pulvérisation selon la revendication 1, comprenant en outre un agent de densification.

3. Composition d'arôme séchée par pulvérisation selon la revendication 2, l'agent de densification étant le saccharose.
